# EUROPEAN PATENT APPLICATION

(11) **EP 4 814 840 A1**
(43) Date of publication of application: **30.09.2026**
(21) Application number: 25188364.1
(22) Date of filing: 09.07.2025
(51) Int. Cl.: G06Q 10/20, G06N 3/02, G06N 20/00

(54) **INFORMATION PROCESSING SYSTEM, INFORMATION PROCESSING PROGRAM, AND INFORMATION PROCESSING METHOD**

(30) Priority: 26.03.2025 JP 2025052705
(71) Applicant: FUJIFILM Business Innovation Corp., Minato-ku Tokyo (JP)
(72) Inventor: SAWAI, Kenji, Yokohama-shi, Kanagawa (JP); MORI, Junichiro, Yokohama-shi, Kanagawa (JP); YOKOTA, Masaru, Yokohama-shi, Kanagawa (JP); MITSUHASHI, Tomoyuki, Yokohama-shi, Kanagawa (JP)
(74) Representative: Becker Kurig & Partner Patentanwälte mbB

(57) **Abstract**

An information processing system includes a processor configured to acquire first information including information about exchange between a user who uses a target apparatus and an operator or a system that receives an inquiry related to a failure in the target apparatus, acquire second information that is information obtained by summarizing the first information by inputting the first information into a first machine learning model having a summary function, acquire answer information for the failure output from a second machine learning model having a diagnostic function related to a failure by inputting the second information into the second machine learning model, and output the answer information.

## Description

### BACKGROUND OF THE INVENTION

### (i) Field of the Invention

The present disclosure relates to an information processing system, an information processing program, and an information processing method.

### (ii) Description of Related Art

JP2020-154662A discloses a maintenance work support apparatus including a first acquisition unit that acquires a dataset including a combination of apparatus information of a target apparatus and operation information of the target apparatus or a dataset including a combination of apparatus information of a target apparatus and event information indicating an event related to the target apparatus, a second acquisition unit that acquires work content information that is content of maintenance work performed on the target apparatus by a maintenance worker and in which a replaced or repaired component or a new component after replacement is recorded, and a learning unit that learns the dataset acquired by the first acquisition unit and the replaced or repaired component or the new component after replacement recorded in the work content information acquired by the second acquisition unit, in association with each other.

### SUMMARY OF THE INVENTION

An object of the present disclosure is to provide an information processing system, an information processing program, and an information processing method capable of obtaining an answer to an inquiry using a model that outputs an answer to an inquiry related to a failure in a target apparatus even in a case where an inquiry in a different form from information in a form used for training the model is received during use of the model.

In order to achieve the object, according to a first aspect of the present disclosure, there is provided an information processing system including a processor configured to acquire first information including information about exchange between a user who uses a target apparatus and an operator or a system that receives an inquiry related to a failure in the target apparatus, acquire second information that is information obtained by summarizing the first information by inputting the first information into a first machine learning model having a summary function, acquire answer information for the failure output from a second machine learning model having a diagnostic function related to a failure by inputting the second information into the second machine learning model, and output the answer information.

According to a second aspect of the present disclosure, in the information processing system according to the first aspect, the first information may be conversation information between the user who uses the target apparatus and the operator or the system that receives the inquiry related to the target apparatus.

According to a third aspect of the present disclosure, in the information processing system according to the second aspect, the processor may be configured to acquire the answer information by inputting the second information and record information related to a conversation between the user and the operator created by the operator into the second machine learning model.

According to a fourth aspect of the present disclosure, in the information processing system according to any one of the first aspect to the third aspect, the first machine learning model may generate the second information including content of the failure by excluding information different from the content of the failure in the information included in the first information.

According to a fifth aspect of the present disclosure, in the information processing system according to any one of the first aspect to the fourth aspect, the first machine learning model may generate the second information by converting a word included in the first information into a word used for training the second machine learning model.

According to a sixth aspect of the present disclosure, in the information processing system according to any one of the first aspect to the fifth aspect, the processor may be configured to present the second information to a person in charge and, in a case where permission from the person in charge is obtained, input the second information into an answer model.

According to a seventh aspect of the present disclosure, in the information processing system according to the sixth aspect, the processor may be configured to present the second information to the operator who receives the inquiry related to the target apparatus and who is the person in charge and, in a case where permission from the operator is obtained, input the second information into the answer model.

According to an eighth aspect of the present disclosure, in the information processing system according to the sixth aspect, the processor may be configured to present the second information to the user who uses the target apparatus and, in a case where permission from the user is obtained, input the second information into the answer model.

According to a ninth aspect of the present disclosure, in the information processing system according to any one of the first aspect to the eighth aspect, the processor may be configured to further output at least one of information related to operation status of the target apparatus or information related to business communication in repairing the target apparatus, the information being information that is different from information related to content of the failure in the first information and that is used by staff members in charge of repairing the target apparatus.

According to a tenth aspect of the present disclosure, there is provided an information processing program causing a computer to execute a process including acquiring first information including information about exchange between a user who uses a target apparatus and an operator or a system that receives an inquiry related to a failure in the target apparatus, acquiring second information that is information obtained by summarizing the first information by inputting the first information into a first machine learning model having a summary function, acquiring answer information for the failure output from a second machine learning model having a diagnostic function related to a failure by inputting the second information into the second machine learning model, and outputting the answer information.

According to an eleventh aspect of the present disclosure, there is provided an information processing method including acquiring first information including information about exchange between a user who uses a target apparatus and an operator or a system that receives an inquiry related to a failure in the target apparatus, acquiring second information that is information obtained by summarizing the first information by inputting the first information into a first machine learning model having a summary function, acquiring answer information for the failure output from a second machine learning model having a diagnostic function related to a failure by inputting the second information into the second machine learning model, and outputting the answer information.

According to the first aspect, the tenth aspect, or the eleventh aspect of the present disclosure, an answer to an inquiry can be obtained using a model that outputs an answer to an inquiry related to a failure in a target apparatus even in a case where an inquiry in a different form from information in a form used for training the model is received during use of the model.

According to the second aspect of the present disclosure, an answer corresponding to a conversation between the user and the operator can be obtained.

According to the third aspect of the present disclosure, an answer corresponding to the record information related to the conversation with the user created by the operator can be obtained.

According to the fourth aspect of the present disclosure, an answer corresponding to the content of the failure in the target apparatus can be obtained.

According to the fifth aspect of the present disclosure, by converting the inquiry using the word used for training the second machine learning model, a more accurate answer can be obtained compared to the answer in a case where the inquiry is simply input.

According to the sixth aspect of the present disclosure, by causing the person in charge to check whether or not the second information is appropriate, a more accurate answer can be obtained compared to the answer in a case where the second information is simply used.

According to the seventh aspect of the present disclosure, by causing the operator to check whether or not the second information is appropriate, a more accurate answer can be obtained compared to the answer in a case where the second information is simply used.

According to the eighth aspect of the present disclosure, by causing the user to check whether or not the second information is appropriate, a more accurate answer can be obtained compared to the answer in a case where the second information is simply used.

According to the ninth aspect of the present disclosure, useful information for the person in charge of repairing the target apparatus can be provided.

### BRIEF DESCRIPTION OF THE DRAWINGS

Exemplary embodiment(s) of the present invention will be described in detail based on the following figures, wherein:
FIG. 1 is a diagram illustrating a schematic configuration of an answer system 10 according to an exemplary embodiment;
FIG. 2 is a diagram for describing the exemplary embodiment;
FIG. 3 is a block diagram illustrating an example of hardware configurations of an information processing apparatus, a user terminal, and an operator terminal according to the exemplary embodiment;
FIG. 4 is a block diagram illustrating a functional configuration example of the information processing apparatus;
FIG. 5 is a diagram for describing a summary provided by a summary machine learning model;
FIG. 6 is a diagram for describing words converted by the summary machine learning model;
FIG. 7 is a diagram for describing a degree of meaningfulness of words in an answer model; and
FIG. 8 is a flowchart illustrating an example of a flow of information processing in the information processing apparatus according to the exemplary embodiment.

### DETAILED DESCRIPTION OF THE INVENTION

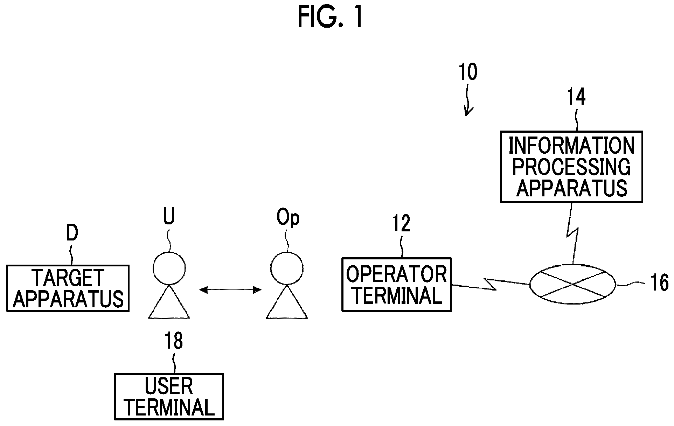

Hereinafter, an example of the present exemplary embodiment will be described in detail with reference to the drawings. In the present exemplary embodiment, an answer system in which a terminal, an information processing apparatus, and the like are connected to each other via a communication line such as various networks will be described as an example. FIG. 1 is a diagram illustrating a schematic configuration of an answer system 10 according to the present exemplary embodiment.

As illustrated in FIG. 1, the present exemplary embodiment assumes a scene where an operator Op receives an inquiry related to a failure in a target apparatus D from a user U who uses the target apparatus D. In such a scene, for example, conversation information between the user U and the operator Op is acquired through a telephone conversation between the user U and the operator Op.

The operator Op transmits the conversation information to an information processing apparatus 14 by operating an operator terminal 12. The information processing apparatus 14 inputs the conversation information into an answer model. Answer information for the failure in the target apparatus D included in the conversation information is output from the answer model.

The answer model is a well-known machine learning model and is trained in advance using a well-known machine learning algorithm or artificial intelligence technology. The answer model is trained based on learning information prepared in advance. The learning information is information in which information related to the failure in the target apparatus and information about a countermeasure for the failure are associated with each other. For example, the learning information is information in which information about the failure in the past in the target apparatus and information about the countermeasure for the failure are associated with each other.

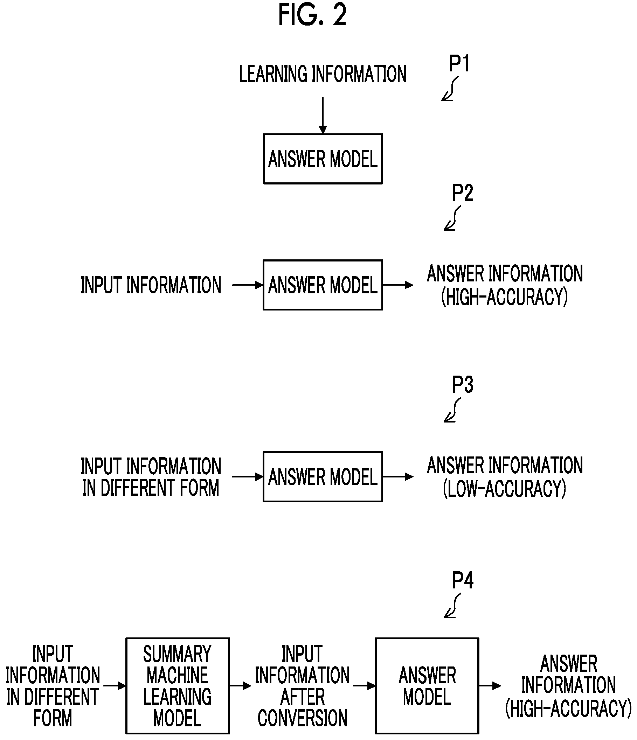

FIG. 2 is a diagram for describing the present exemplary embodiment. As illustrated in P1 of FIG. 2, the answer model of the present exemplary embodiment is trained in advance using the learning information. Thus, as illustrated in P2 of FIG. 2, in a case where input information in the same form as the learning information is input into the answer model, the answer model is assumed to output high-accuracy answer information.

Meanwhile, as illustrated in P3 of FIG. 2, in a case where input information in a different form from the learning information is input into the answer model, the answer model is assumed to output low-accuracy answer information. For example, the conversation information includes business communication, greeting, or the like. Thus, in a case where the conversation information including such information is simply input into the answer model, low-accuracy answer information is assumed to be output. The conversation information varies depending on, for example, a difference in technique, a region, or culture of a country of the operator who receives the inquiry. Thus, for example, in a case where the answer model generated based on the learning information obtained in a certain region or country is used in another region or country, high-accuracy answer information is assumed not to be obtained even in a case where the conversation information obtained in the other region or country is simply input into the answer model.

Therefore, in the present exemplary embodiment, as illustrated in P4 of FIG. 2, the input information is converted into information in an appropriate form by summarizing the input information. Specifically, in the present exemplary embodiment, the received input information is converted into information in a form appropriate as the input of the answer model using a machine learning model. In the present exemplary embodiment, the converted input information is input into the answer model. Accordingly, even in a case where an inquiry in a different form from information in a form used for training the answer model is received, an answer to the inquiry may be obtained using the answer model.

As illustrated in FIG. 1, the answer system 10 according to the present exemplary embodiment includes the operator terminal 12, the information processing apparatus 14, and the like. The operator terminal 12 and the information processing apparatus 14 are connected to each other via a communication line 16 such as a local area network (LAN), a wide area network (WAN), the Internet, or an intranet. Each of the operator terminal 12 and the information processing apparatus 14 can transmit and receive various types of data to and from each other via the communication line 16. The information processing apparatus 14 acquires the answer information output from the answer model by inputting the conversation information transmitted from the operator terminal 12 into the answer model, and outputs the answer information to the operator terminal 12. The answer system 10 may further include a user terminal 18 illustrated in FIG. 1. In this case, the user terminal 18 can communicate with the operator terminal 12, the information processing apparatus 14, and the like and, for example, transmit and receive various types of data to and from each other via the communication line 16.

While the number of each of the operator terminal 12, the information processing apparatus 14, and the user terminal 18 illustrated in FIG. 1 is one, the number of each of the operator terminal 12, the information processing apparatus 14, and the user terminal 18 may be plural, or the number of some of the operator terminal 12, the information processing apparatus 14, and the user terminal 18 may be plural.

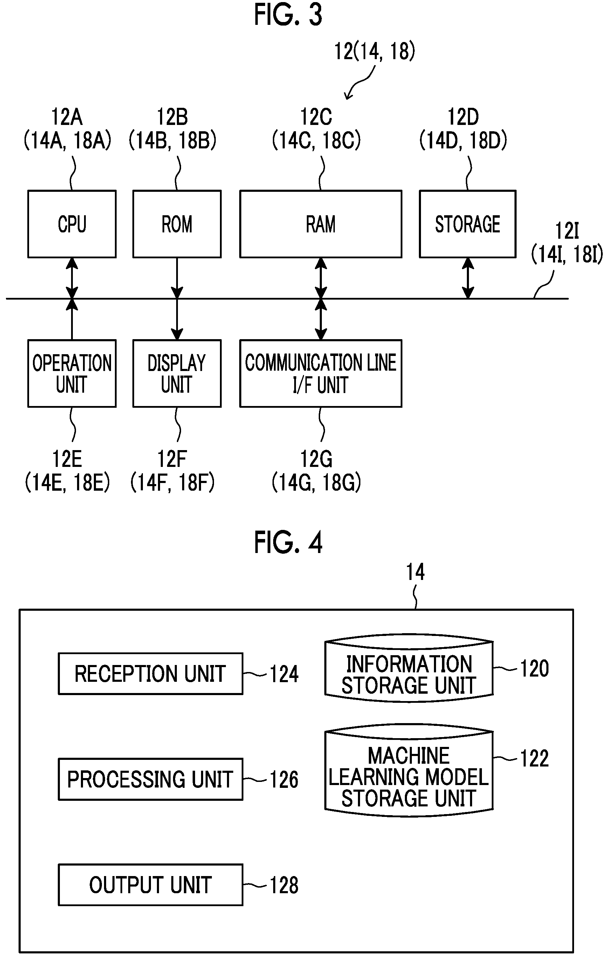

Basic configurations of electrical systems of the operator terminal 12, the information processing apparatus 14, and the user terminal 18 according to the present exemplary embodiment will be described. FIG. 3 is a block diagram illustrating the basic configurations of the electrical systems of the operator terminal 12, the information processing apparatus 14, and the user terminal 18 in the answer system 10 according to the present exemplary embodiment. The operator terminal 12, the information processing apparatus 14, and the user terminal 18 have general computer configurations. Thus, the information processing apparatus 14 will be representatively described below.

As illustrated in FIG. 3, the information processing apparatus 14 according to the present exemplary embodiment includes a CPU 14A as an example of a processor, a ROM 14B, a RAM 14C, a storage 14D, an operation unit 14E, a display unit 14F, and a communication line interface (I/F) unit 14G. The CPU 14A controls an operation of the whole information processing apparatus 14. The ROM 14B stores various control programs, various parameters, and the like in advance. The RAM 14C is used as a work area or the like when the CPU 14A executes various programs. The storage 14D stores various types of data, application programs, and the like. The operation unit 14E is used to input various types of information. The display unit 14F is used to display various types of information. The communication line I/F unit 14G is connected to the communication line 16 and transmits and receives various types of data to and from other apparatuses connected to the communication line 16. The communication line I/F unit 14G may be configured to directly communicate with each apparatus using various well-known types of wireless communication. The above units of the information processing apparatus 14 are electrically connected to each other by a system bus 14I. While the storage 14D is applied as a storage unit in the information processing apparatus 14 according to the present exemplary embodiment, a non-volatile storage unit such as a hard disk drive (HDD) or a flash memory is applied as an example of the storage.

With the above configuration, the information processing apparatus 14 according to the present exemplary embodiment executes, via the CPU 14A, each of access to the ROM 14B, the RAM 14C, and the storage 14D, acquisition of various types of data via the operation unit 14E, and display of various types of information on the display unit 14F. The information processing apparatus 14 executes, via the CPU 14A, a control of transmission and reception of communication data via the communication line I/F unit 14G.

Similarly, the operator terminal 12 according to the present exemplary embodiment executes, via a CPU 12A, each of access to a ROM 12B, a RAM 12C, and a storage 12D, acquisition of various types of data via an operation unit 12E, and display of various types of information on a display unit 12F. The operator terminal 12 executes, via the CPU 12A, a control of transmission and reception of communication data via a communication line I/F unit 12G.

Similarly, the user terminal 18 according to the present exemplary embodiment executes, via a CPU 18A, each of access to a ROM 18B, a RAM 18C, and a storage 18D, acquisition of various types of data via an operation unit 18E, and display of various types of information on a display unit 18F. The user terminal 18 executes, via the CPU 18A, a control of transmission and reception of communication data via a communication line I/F unit 18G.

Next, a functional configuration of the information processing apparatus 14 will be described. FIG. 4 is a block diagram illustrating an example of the functional configuration of the information processing apparatus 14. The information processing apparatus 14 is an example of an information processing system of the present disclosure.

Functionally, as illustrated in FIG. 4, the information processing apparatus 14 is configured to include an information storage unit 120, a machine learning model storage unit 122, a reception unit 124, a processing unit 126, and an output unit 128.

The information storage unit 120 stores various types of information necessary for executing each type of processing described later. For example, information related to each of a plurality of target apparatuses is stored.

The machine learning model storage unit 122 stores a summary machine learning model that summarizes the input information, and the answer model that answers the input information. The summary machine learning model has a summary function and converts the input information into information in an appropriate form. The answer model has a diagnostic function related to the failure in the target apparatus and is trained in advance using the learning information obtained in a certain region. The summary machine learning model is an example of a first machine learning model of the present disclosure. The answer model is an example of a second machine learning model of the present disclosure. The summary machine learning model and the answer model are well-known machine learning models and are trained in advance using a well-known machine learning algorithm or artificial intelligence technology.

The reception unit 124 acquires first information including information about exchange between the user U who uses the target apparatus D and the operator Op or a system (for example, the information processing apparatus 14) that receives the inquiry related to the failure in the target apparatus D. The first information is information including the conversation information between the user who uses the target apparatus D and the operator Op or the system that receives the inquiry related to the target apparatus D.

The conversation information is, for example, record information related to a conversation between the user U and the operator Op created by the operator Op. The record information is, for example, a memo in which the operator Op writes the conversation with the user U in a sentence. The record information includes, for example, only a summary of the inquiry from the user U.

Alternatively, the conversation information is, for example, sentence information in which audio information between the user U and the operator Op is written in a sentence. The sentence information is generated using, for example, a well-known technology of transcribing the audio information into a sentence.

Alternatively, the conversation information may be, for example, information registered in the system via a terminal operated by the user U who uses the target apparatus D. In this case, the conversation information may be, for example, sentence information generated by a chat between the user U and the operator Op (or a chatbot). Alternatively, the conversation information may be, for example, information about a sentence input by the user U on an inquiry screen provided by the system (for example, the information processing apparatus 14) by operating the user terminal, or a sentence registered in the system through an email.

The processing unit 126 acquires second information that is information obtained by summarizing the first information, by inputting the first information acquired by the reception unit 124 into the summary machine learning model stored in the machine learning model storage unit 122. In the present exemplary embodiment, the summarizing refers to processing including, for example, not only gathering content of the sentence indicated by the first information and extracting only a meaningful part but also converting words or deleting words. The summary machine learning model is trained in advance to be capable of performing each of the following types of processing.

The summary machine learning model generates the second information including content of the failure in the target apparatus D by excluding information different from the content of the failure in the target apparatus D in the information included in the first information.

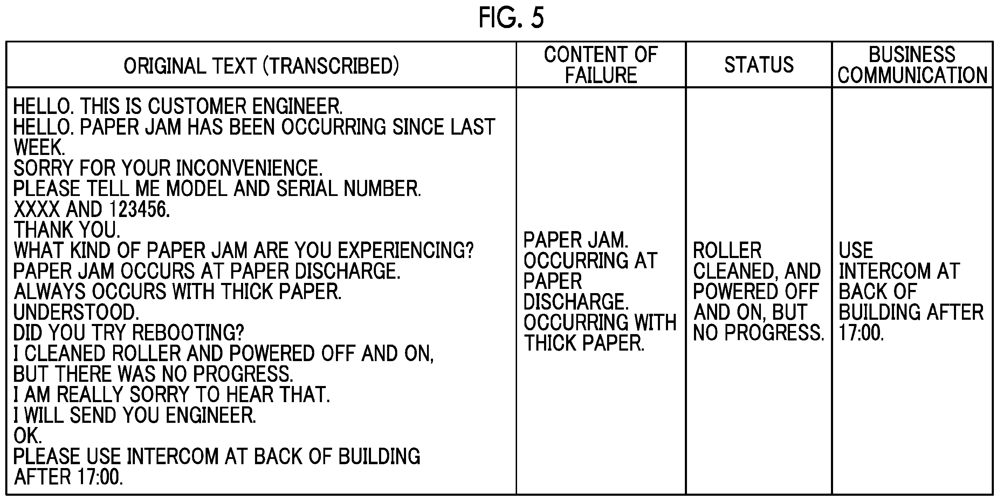

FIG. 5 is a diagram for describing a summary provided by the summary machine learning model. As illustrated in FIG. 5, for example, in a case where the sentence information (in FIG. 5, illustrated as "original text (transcribed)") in which the audio information between the user U and the operator Op is written in a sentence is obtained, information related to the content of the failure in the sentence information is "Paper jam. Occurring at paper discharge. Occurring with thick paper", and this information is useful information as the measure for the target apparatus D. Thus, the summary machine learning model extracts the information related to the content of the failure in the sentence information. Meanwhile, information about the greeting or the business communication included in the sentence information is information that is not useful as the measure for the target apparatus D and may act as noise. Thus, the summary machine learning model deletes information different from the content of the failure in the sentence information. Information shown in the field of "status" illustrated in FIG. 5 is information about a result of performing any operation on the target apparatus D (for example, trial and error of the operation). However, content of the information does not always accurately indicate the content of the failure. Thus, for example, it is preferable that the information is deleted in a case where the answer model predicts the measure. Accordingly, the summary machine learning model also deletes the information shown in the field of "status" in the sentence information. The summary machine learning model also deletes information shown in the field of "business communication" illustrated in FIG. 5.

The summary machine learning model generates the second information by converting words included in the first information into words that are used for training the answer model (for example, frequently used words, meaningful words, words indicating a name of the failure or a malfunction, or words indicating a name of a part of the target apparatus).

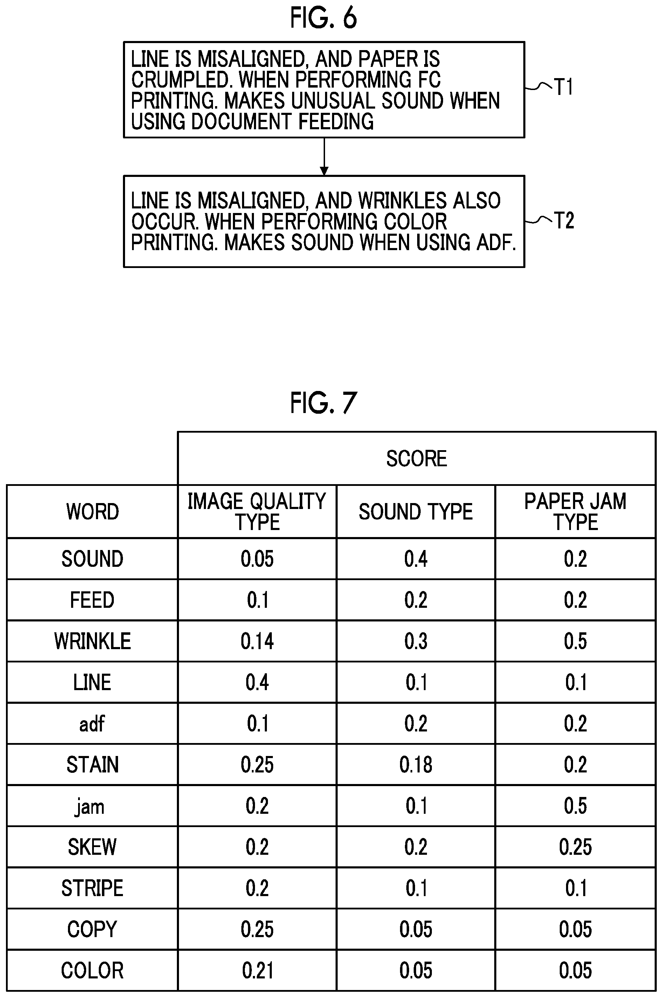

FIG. 6 is a diagram for describing the words converted by the summary machine learning model. As illustrated in FIG. 6, for example, first information T1 is considered to be information indicating that "Line is misaligned and paper is crumpled. When performing FC printing. Also makes unusual sound when using document feeding". In this case, the summary machine learning model converts the first information T1 indicating that "Line is misaligned and paper is crumpled. When performing FC printing. Also makes unusual sound when using document feeding" into second information T2 indicating that "Line is misaligned, and wrinkles also occur. When performing color printing. Makes sound when using ADF.". In this case, the summary machine learning model converts "crumpled" into "wrinkles", converts "FC" into "color", converts "document feeding" into "ADF", and converts "unusual sound" into "sound". The summary machine learning model also executes not only the conversion of the words but also conversion of the sentence.

FIG. 7 is a diagram for describing a degree of meaningfulness of words in the answer model. As illustrated in FIG. 7, a score indicating a degree of meaningfulness is assigned to each word. This score is the degree of meaningfulness for the answer model, and the answer model is trained based on the words.

The summary machine learning model selects a word to be used with reference to, for example, a list of words illustrated in FIG. 7. Since the score indicating the degree of meaningfulness is assigned to each word in the list of words illustrated in FIG. 7, a priority order related to which word is to be selected can be set. Scoring of the degree of meaningfulness may be executed using bag of words (BoW) that is a technique for a machine learning algorithm, or other techniques.

For example, the summary machine learning model specifies which type of the failure (for example, an image quality type, a sound type, or a paper jam type) illustrated in FIG. 7 the sentence indicated by the first information corresponds to. The summary machine learning model replaces the words in the sentence indicated by the first information with the words in the list in accordance with a result of specifying the type of the failure and the score indicating the degree of meaningfulness.

The summary machine learning model may simply select the word to be used with reference to the list of words to be used without using the score of the degree of meaningfulness. Alternatively, the summary machine learning model may be trained in advance to be capable of converting the words.

In other words, words included in the conversation information may be referred to differently from the words used for training the answer model. For example, even in a case where a word "X" is included in the conversation information, the word "X" may be referred to as "Y" in the field of the target apparatus (or in the training of the answer model), and the answer model may be trained in advance using the word "Y". In such a case, even in a case where the conversation information including the word "X" is input into the answer model, more accurate answer information is assumed not to be obtained. Therefore, in the present exemplary embodiment, in converting the first information into the second information, the first information is converted into the second information using the words that are used for training the answer model (for example, frequently used words, the meaningful words, words indicating a name of the failure or a malfunction, or words indicating a name of a part of the target apparatus). Accordingly, a more accurate answer may be obtained compared to the answer in a case where the first information is simply input into the answer model.

The list of words to be used may be updated by comparing the list of words illustrated in FIG. 7 with words included in the second information.

Next, the processing unit 126 acquires the answer information for the failure output from the answer model by inputting the second information output from the summary machine learning model into the answer model stored in the machine learning model storage unit 122.

In this case, the processing unit 126 may present the second information output from the summary machine learning model to a person in charge and, in a case where permission from the person in charge is obtained, input the second information into the answer model. For example, the processing unit 126 presents the second information output from the summary machine learning model to the operator Op who receives the inquiry related to the target apparatus D and who is the person in charge and, in a case where permission from the operator Op is obtained, inputs the second information into the answer model. In this case, the processing unit 126 displays the second information on the display unit 12F of the operator terminal 12 and obtains information about the permission as to whether or not the second information may be input into the answer model.

Alternatively, for example, the processing unit 126 present the second information output from the summary machine learning model to the user U who uses the target apparatus D and, in a case where permission from the user U is obtained, inputs the second information into the answer model. In this case, the processing unit 126 displays the second information on the display unit 18F of the user terminal 18 and obtains information about the permission as to whether or not the second information may be input into the answer model.

The processing unit 126 acquires the answer information for the failure output from the answer model by inputting the second information for which the permission is obtained into the answer model.

The processing unit 126 may input not only the second information but also other pieces of information into the answer model. For example, the processing unit 126 may acquire the answer information by inputting the second information and the record information related to the conversation between the user U and the operator Op created by the operator Op into the answer model.

The answer information is information indicating a measure for the failure in the target apparatus. The answer model of the present exemplary embodiment has the diagnostic function related to the failure in the target apparatus. Thus, for example, the answer information is information in which a specific countermeasure is expressed in a sentence (for example, "Please replace component ZZ"). Alternatively, for example, the answer information may be information including only identification information (for example, a component number) of a component that causes the failure.

The output unit 128 outputs the answer information acquired by the processing unit 126 as a result.

The answer information output from the output unit 128 is displayed on, for example, the display unit 12F of the operator terminal 12. In this case, the operator Op transmits the measure indicated by the answer information to the user U. Alternatively, the answer information output from the output unit 128 is output to a terminal different from the operator terminal 12. For example, in a case where the conversation is performed through a chat, the answer information may be displayed on the display unit 18F of the user terminal 18 operated by the user U. Alternatively, for example, the answer information may be displayed on a terminal (not illustrated) operated by a customer engineer or the like. In this case, the customer engineer checks the answer information and performs repair or the like of the target apparatus D with a replacement target component or the like. An output result may be transmitted to any email address by email.

The output unit 128 may further output information that is different from the information related to the content of the failure in the first information acquired by the reception unit 124 and that is used by staff members in charge of repairing the target apparatus D. For example, the output unit 128 may further output at least one of information related to the operation status of the target apparatus D or information related to the business communication in repairing the target apparatus D.

The information shown in each of the fields "status" and "business communication" illustrated in FIG. 5 is not appropriate as the input information for the answer model but is useful as information for the person in charge of repairing the target apparatus D (for example, a customer engineer). Thus, the output unit 128 may extract the information that is different from the information related to the content of the failure in the first information acquired by the reception unit 124 and that is used for the person in charge of repairing the target apparatus D, and output the information together with the answer information.

Next, specific processing performed by the answer system 10 according to the present exemplary embodiment configured as described above will be described.

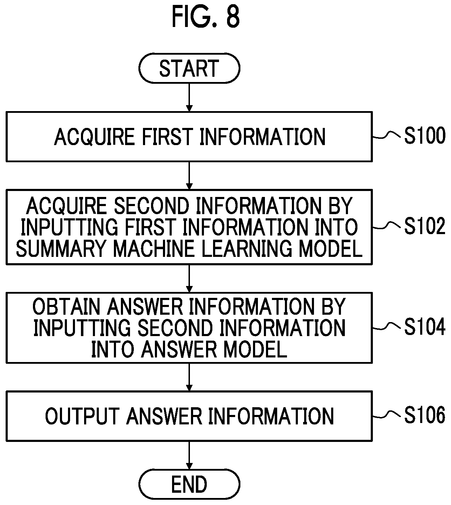

First, in the information processing apparatus 14, the information processing illustrated in FIG. 8 is performed by causing the CPU 14A to read an information processing program from the ROM 14B or the storage 14D, load the information processing program into the RAM 14C, and execute the information processing program.

In step S100, the CPU 14A acquires the first information including the information about exchange between the user U who uses the target apparatus D and the operator Op or the system (for example, the information processing apparatus 14) that receives the inquiry related to the failure in the target apparatus D.

In step S102, the CPU 14A acquires the second information that is information obtained by summarizing the first information, by inputting the first information acquired in step S100 into the summary machine learning model stored in the machine learning model storage unit 122.

In step S104, the CPU 14A acquires the answer information for the failure output from the answer model by inputting the second information acquired in step S102 into the answer model stored in the machine learning model storage unit 122.

In step S106, the CPU 14A outputs the answer information acquired in step S104 as a result.

While the exemplary embodiment of the present invention is described above, the exemplary embodiment of the present inventions is not limited to the exemplary embodiment and may be subjected to various modifications and implementations without changing the gist of the present invention. For example, while the exemplary embodiment illustratively describes a case where the information processing apparatus 14 generates the answer information for the first information, the present invention is not limited to the exemplary embodiment. For example, the operator terminal 12, the user terminal 18, or a terminal (not illustrated) operated by the customer engineer may generate the answer information for the first information. Alternatively, for example, the target apparatus D may generate the answer information for the first information.

The information related to the target apparatus (for example, specifications, standards, mount status of an optional apparatus, or operation information of the target apparatus) may be inputtable into the answer model. In this case, the answer model is, for example, a machine learning model trained in advance based on the learning information in which the information about the failure in the target apparatus in the past, the information related to the target apparatus (for example, the specifications, the standards, the mount status of the optional apparatus, or the operation information of the target apparatus), and the information about the countermeasure for the failure are associated with each other. In this case, in a case where the information related to the target apparatus and the first information are input into the answer model, the answer information is output from the answer model. By taking the information related to the target apparatus into consideration, higher-accuracy answer information may be obtained.

A part of the constituents of the exemplary embodiments may be removed or changed without changing the gist of the present invention. Steps in the flow of the exemplary embodiment can be, for example, added, deleted, changed, or switched without changing the gist of the present invention.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.
(((1))) An information processing system comprising:
   a processor configured to:
   acquire first information including information about exchange between a user who uses a target apparatus and an operator or a system that receives an inquiry related to a failure in the target apparatus;
   acquire second information that is information obtained by summarizing the first information by inputting the first information into a first machine learning model having a summary function;
   acquire answer information for the failure output from a second machine learning model having a diagnostic function related to a failure by inputting the second information into the second machine learning model; and
   output the answer information.
(((2))) The information processing system according to (((1))), wherein the first information is conversation information between the user who uses the target apparatus and the operator or the system that receives the inquiry related to the target apparatus.
(((3))) The information processing system according to (((2))), wherein the processor is configured to:
   acquire the answer information by inputting the second information and record information related to a conversation between the user and the operator created by the operator into the second machine learning model.
(((4))) The information processing system according to any one of (((1))) to (((3))),
   wherein the first machine learning model generates the second information including content of the failure by excluding information different from the content of the failure in the information included in the first information.
(((5))) The information processing system according to any one of (((1))) to (((4))),
   wherein the first machine learning model generates the second information by converting a word included in the first information into a word used for training the second machine learning model.
(((6))) The information processing system according to any one of (((1))) to (((5))), wherein the processor is configured to:
   present the second information to a person in charge and, in a case where permission from the person in charge is obtained, input the second information into an answer model.
(((7))) The information processing system according to (((6))), wherein the processor is configured to:
   present the second information to the operator who receives the inquiry related to the target apparatus and who is the person in charge and, in a case where permission from the operator is obtained, input the second information into the answer model.
(((8))) The information processing system according to (((6))), wherein the processor is configured to:
   present the second information to the user who uses the target apparatus and, in a case where permission from the user is obtained, input the second information into the answer model.
(((9))) The information processing system according to any one of (((1))) to (((8))), wherein the processor is configured to:
   further output at least one of information related to operation status of the target apparatus or information related to business communication in repairing the target apparatus, the information being information that is different from information related to content of the failure in the first information and that is used by staff members in charge of repairing the target apparatus.
(((10))) An information processing program causing a computer to execute a process comprising:
   acquiring first information including information about exchange between a user who uses a target apparatus and an operator or a system that receives an inquiry related to a failure in the target apparatus;
   acquiring second information that is information obtained by summarizing the first information by inputting the first information into a first machine learning model having a summary function;
   acquiring answer information for the failure output from a second machine learning model having a diagnostic function related to a failure by inputting the second information into the second machine learning model; and
   outputting the answer information.

According to (((1))) or (((10))), an answer to an inquiry can be obtained using a model that outputs an answer to an inquiry related to a failure in a target apparatus even in a case where an inquiry in a different form from information in a form used for training the model is received during use of the model.

According to (((2))), an answer corresponding to a conversation between the user and the operator can be obtained.

According to (((3))), an answer corresponding to the record information related to the conversation with the user created by the operator can be obtained.

According to (((4))), an answer corresponding to the content of the failure in the target apparatus can be obtained.

According to (((5))), by converting the inquiry using the word used for training the second machine learning model, a more accurate answer can be obtained compared to the answer in a case where the inquiry is simply input.

According to (((6))), by causing the person in charge to check whether or not the second information is appropriate, a more accurate answer can be obtained compared to the answer in a case where the second information is simply used.

According to (((7))), by causing the operator to check whether or not the second information is appropriate, a more accurate answer can be obtained compared to the answer in a case where the second information is simply used.

According to (((8))), by causing the user to check whether or not the second information is appropriate, a more accurate answer can be obtained compared to the answer in a case where the second information is simply used.

According to (((9))), useful information for the person in charge of repairing the target apparatus can be provided.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: answer system
12: operator terminal
12A, 14A, 18A: CPU
12B, 14B, 18B: ROM
12C, 14C, 18C: RAM
12D, 14D, 18D: storage
12E, 14E, 18E: operation unit
12F, 14F, 18F: display unit
12G, 14G, 18G: communication line I/F unit
12I, 14I, 18I: system bus
14: information processing apparatus
16: communication line
18: user terminal
120: information storage unit
122: machine learning model storage unit
124: reception unit
126: processing unit
128: output unit

## Claims

1. An information processing system comprising:
a processor configured to:
acquire first information including information about exchange between a user who uses a target apparatus and an operator or a system that receives an inquiry related to a failure in the target apparatus;
acquire second information that is information obtained by summarizing the first information by inputting the first information into a first machine learning model having a summary function;
acquire answer information for the failure output from a second machine learning model having a diagnostic function related to a failure by inputting the second information into the second machine learning model; and
output the answer information.

2. The information processing system according to claim 1,
wherein the first information is conversation information between the user who uses the target apparatus and the operator or the system that receives the inquiry related to the target apparatus.

3. The information processing system according to claim 2, wherein the processor is configured to:
acquire the answer information by inputting the second information and record information related to a conversation between the user and the operator created by the operator into the second machine learning model.

4. The information processing system according to any one of claims 1 to 3,
wherein the first machine learning model generates the second information including content of the failure by excluding information different from the content of the failure in the information included in the first information.

5. The information processing system according to any one of claims 1 to 4,
wherein the first machine learning model generates the second information by converting a word included in the first information into a word used for training the second machine learning model.

6. The information processing system according to any one of claims 1 to 5, wherein the processor is configured to:
present the second information to a person in charge and, in a case where permission from the person in charge is obtained, input the second information into an answer model.

7. The information processing system according to claim 6, wherein the processor is configured to:
present the second information to the operator who receives the inquiry related to the target apparatus and who is the person in charge and, in a case where permission from the operator is obtained, input the second information into the answer model.

8. The information processing system according to claim 6, wherein the processor is configured to:
present the second information to the user who uses the target apparatus and, in a case where permission from the user is obtained, input the second information into the answer model.

9. The information processing system according to any one of claims 1 to 8, wherein the processor is configured to:
further output at least one of information related to operation status of the target apparatus or information related to business communication in repairing the target apparatus, the information being information that is different from information related to content of the failure in the first information and that is used by staff members in charge of repairing the target apparatus.

10. An information processing program causing a computer to execute a process comprising:
acquiring first information including information about exchange between a user who uses a target apparatus and an operator or a system that receives an inquiry related to a failure in the target apparatus;
acquiring second information that is information obtained by summarizing the first information by inputting the first information into a first machine learning model having a summary function;
acquiring answer information for the failure output from a second machine learning model having a diagnostic function related to a failure by inputting the second information into the second machine learning model; and
outputting the answer information.

11. An information processing method comprising:
acquiring first information including information about exchange between a user who uses a target apparatus and an operator or a system that receives an inquiry related to a failure in the target apparatus;
acquiring second information that is information obtained by summarizing the first information by inputting the first information into a first machine learning model having a summary function;
acquiring answer information for the failure output from a second machine learning model having a diagnostic function related to a failure by inputting the second information into the second machine learning model; and
outputting the answer information.

## Amended claims

### Amended claims in accordance with Rule 137(2) EPC.

1. An information processing system (14) comprising:
a processor (14A) configured to:
acquire first information including information about exchange between a user who uses a target apparatus and an operator or a system that receives an inquiry related to a failure in the target apparatus;
acquire second information that is information obtained by summarizing the first information by inputting the first information into a first machine learning model having a summary function,
**characterized in that** the first machine learning model generates the second information including content of the failure by excluding information different from the content of the failure in the information included in the first information;
acquire answer information for the failure output from a second machine learning model having a diagnostic function related to a failure by inputting the second information into the second machine learning model; and
output the answer information.

2. The information processing system (14) according to claim 1,
wherein the first information is conversation information between the user who uses the target apparatus and the operator or the system that receives the inquiry related to the target apparatus.

3. The information processing system (14) according to claim 2, wherein the processor (14A) is configured to:
acquire the answer information by inputting the second information and record information related to a conversation between the user and the operator created by the operator into the second machine learning model.

4. The information processing system (14) according to any one of claims 1 to 3,
wherein the first machine learning model generates the second information by converting a word included in the first information into a word used for training the second machine learning model.

5. The information processing system (14) according to any one of claims 1 to 4, wherein the processor (14A) is configured to:
present the second information to a person in charge and, in a case where permission from the person in charge is obtained, input the second information into an answer model.

6. The information processing system (14) according to claim 5, wherein the processor (14A) is configured to:
present the second information to the operator who receives the inquiry related to the target apparatus and who is the person in charge and, in a case where permission from the operator is obtained, input the second information into the answer model.

7. The information processing system (14) according to claim 5, wherein the processor (14A) is configured to:
present the second information to the user who uses the target apparatus and, in a case where permission from the user is obtained, input the second information into the answer model.

8. The information processing system (14) according to any one of claims 1 to 7, wherein the processor (14A) is configured to:
further output at least one of information related to operation status of the target apparatus or information related to business communication in repairing the target apparatus, the information being information that is different from information related to content of the failure in the first information and that is used by staff members in charge of repairing the target apparatus.

9. An information processing program causing a computer to execute a process comprising:
acquiring first information including information about exchange between a user who uses a target apparatus and an operator or a system that receives an inquiry related to a failure in the target apparatus;
acquiring second information that is information obtained by summarizing the first information by inputting the first information into a first machine learning model having a summary function,
**characterized in that** the first machine learning model generates the second information including content of the failure by excluding information different from the content of the failure in the information included in the first information;
acquiring answer information for the failure output from a second machine learning model having a diagnostic function related to a failure by inputting the second information into the second machine learning model; and
outputting the answer information.

10. An information processing method comprising:
acquiring first information including information about exchange between a user who uses a target apparatus and an operator or a system that receives an inquiry related to a failure in the target apparatus;
acquiring second information that is information obtained by summarizing the first information by inputting the first information into a first machine learning model having a summary function,
**characterized in that** the first machine learning model generates the second information including content of the failure by excluding information different from the content of the failure in the information included in the first information;
acquiring answer information for the failure output from a second machine learning model having a diagnostic function related to a failure by inputting the second information into the second machine learning model; and
outputting the answer information.
